# EUROPEAN PATENT APPLICATION

(11) **EP 4 390 592 A1**
(43) Date of publication of application: **26.06.2024**
(21) Application number: 22215430.4
(22) Date of filing: 21.12.2022
(51) Int. Cl.: G05B 23/02, H05B 45/50

(54) **PREDICTIVE DEVICE MAINTENANCE WITH MULTI-DEVICE ERROR LOGGING**

(71) Applicant: Tridonic GmbH & Co. KG, 6851 Dornbirn (AT)
(72) Inventor: Maldoner, Jakob, 6850 Dornbirn (AT)
(74) Representative: Beder, Jens

(57) **Abstract**

A building infrastructure comprises building infrastructure devices and a monitoring device, which are connected by a communication network. The monitoring device is configured to determine, in response to receiving a failure message from a building infrastructure device of the building infrastructure devices, whether a further building infrastructure device of the building infrastructure devices has a corresponding failure as the building infrastructure device. The monitoring device is configured to determine that a failure cause for the failure is a common environmental influence of the building infrastructure device and the further building infrastructure device in case the further building infrastructure device has the corresponding failure as the building infrastructure device. The monitoring device is further configured to determine that a failure cause for the failure is a local failure of the building infrastructure device, in case the further building infrastructure device has a different failure as the building infrastructure device.

## Description

The invention concerns the field of building infrastructure, failure localization in building infrastructure and predictive maintenance for devices of building infrastructure. In particular, localizing and predicting failures in devices of the building infrastructure and a corresponding building infrastructure including a monitoring system is presented.

Predictive maintenance for technical devices and systems represents a field of endeavour which has an increasingly important role for improving availability, reliability maintenance and overall, customer satisfaction with complex technical systems. This also applies to building infrastructures, which usually includes a large number of electronic devices arranged over the building. Building infrastructures may include lighting systems, emergency lighting systems, escape route guiding systems, and heating and ventilation (HVAC) systems in order to name just a few examples.

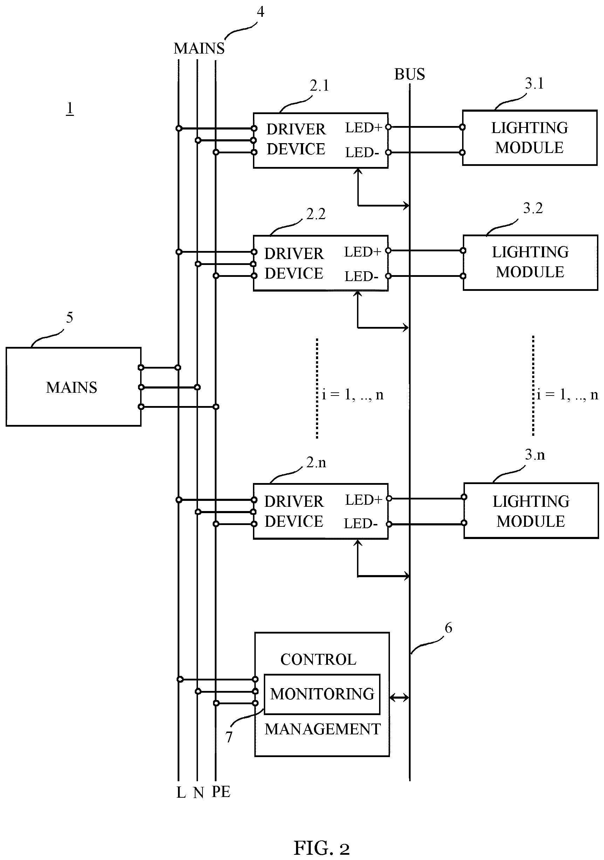

A lighting system includes a plurality of different devices, the most prominent of which are lighting modules, which emit light, light driver devices, which generate a load current from mains supply of the site and provide the generated load current to the lighting modules, and control devices of different types. A communication network may connect the control devices with the light driver devices, in order to enable the control devices to control light emission by the lighting modules and to collect status messages and failure messages from the light drives devices and lighting modules. The control devices may include, or be connected with, a monitoring device, which monitors the operational status of the individual devices of the lighting system, based on, for example, received status messages and error messages. Fig. 2 of the attached drawings illustrates a simplified structure of an exemplary lighting system.

An expected lifetime of electronic circuits, which are an important part in building infrastructure devices with regard to functionality and availability, depends on the expected lifetime of electronic components arranged on printed circuit boards (PCB) such as electrolytic capacitors, semiconductors or even resistors and their ability to retain their respective component values and functionality over their whole component life.

It is therefore an objective to improve building infrastructures with regard to predictive maintenance and managing of upcoming failures in electronic devices of the building infrastructure.

The building infrastructure according to the enclosed independent claim achieves this objective

The dependent claims define further advantageous implementations of the building infrastructure.

According to a first aspect, a building infrastructure comprises a plurality of building infrastructure devices and a monitoring device, which are connected by a communication network. The monitoring device is configured to determine, in response to receiving a failure message from one building infrastructure device of the plurality of building infrastructure devices, whether at least one further building infrastructure device of the plurality of building infrastructure devices has a corresponding failure as the building infrastructure device. The monitoring device is configured to determine that a failure cause for the failure is a common environmental influence of the building infrastructure device and the at least one further building infrastructure device in case the at least one further building infrastructure device has the corresponding failure as the building infrastructure device. The monitoring device is furthermore configured to determine that a failure cause for the failure is a local failure of the building infrastructure device, in case the at least one further building infrastructure device has a different failure as the building infrastructure device or no failure at all.

Current approaches for failure prediction in a building infrastructure device base on counting a runtime of the building infrastructure device and on calculating, and in particular predicting a remaining lifetime of electronic components, e.g. of electrolytic capacitors based on the counted runtime of the building infrastructure device . Current building infrastructures do not determine a cause for an error message generated in the building infrastructure. Contrary thereto, the building infrastructure according to the first aspect introduces a differentiation between causes for shutdown of building infrastructure devices. Identifying a specific failure cause enables the building infrastructure to predict a possible total dropout rate in the future for the complete building infrastructure. Whenever the monitoring device determines an event like receiving an error notification from at least one the building infrastructure devices, the monitoring device acquires from all building infrastructure devices connected via the communication network status information. Based on the acquired information from the other building infrastructure devices and the failure notification of the at least one building infrastructure device, the monitoring device may now determine whether the other building infrastructure devices of the building infrastructure also raised an error notification. Moreover, the monitoring device determines further whether the other building infrastructure devices raised a same type of error in the notification or a different type of error notification. A same type of error or corresponding failure can be determined from a look up table for example, in which failures are associated for which it is known that they typically occur as a result of the same external (environmental) influence, for example overvoltage or high ambient temperatures. The monitoring device now is enabled to conclude which kind of error, e.g. an internal error of the at least one building infrastructure device transmitting the error notification initially, or potentially an error having a common error cause due to an environmental influence on a number of building infrastructure devices is present. In an example, the building infrastructure devices had been or are being exposed to an overvoltage on the mains supply line, or short voltage spikes on the mains supply line, for example, which might shorten their lifetime considerably. In another example, a sudden temperature rise over a part of the site including a plurality of building infrastructure devices of the building infrastructure, may be determined as the cause for the initial failure notification of the building infrastructure device, which may then spread to further building infrastructure devices arranged in the vicinity of the building infrastructure device.

Based on the information, which kind of failure occurred, and how many building infrastructure devices of the building infrastructure are affected by the failure, the monitoring device may assume what the cause for the current failure notification was.

For example, a building infrastructure device may shut down and notify the monitoring device via the communication network of the shutdown due to a DC bus undervoltage on a DC bus generated and provided by a PFC circuit of the building infrastructure device. The undervoltage on the DC voltage line may caused by two different failure mechanisms.

One possible failure mechanism (failure cause) is an interruption of a mains supply to the respective building infrastructure device notifying the undervoltage on the DC bus line.

An alternative failure cause may result from an internal device failure, for example due to an electronic component in the control loop circuitry of a power factor correction circuit (PFC) circuit stage of the building infrastructure device generating the DC bus voltage reaching its end-of-life and failing. This second failure mechanism is an internal failure of the building infrastructure device providing the failure notification.

If, however also another building infrastructure device is shutting down with the corresponding failure notification to the monitoring device referring to a DC bus undervoltage failure, the monitoring device is able to conclude that the failure notification of both building infrastructure devices was caused by a same failure cause, most probably a mains failure. In consequence, the monitoring device may output information suggesting to a technician the determined failure cause and a potential shutdown of further building infrastructure devices due to the same failure cause, although up to now no respective failure message was received from those further building infrastructure devices of the building infrastructure.

In a further advantageous example, a voltage surge pulse may trigger an overvoltage detection function in a load circuit of a building infrastructure device, e.g. a light driver, which protects a lighting module. The monitoring device may determine that a failure cause for the failure is in a common environmental influence of the building infrastructure device, e.g. by an event on a mains supply line due to the at least one further building infrastructure device having the corresponding failure of triggering the overvoltage protection function in the load circuit as the building infrastructure device shows. The monitoring device is therefore able to exclude a local failure, e.g. a LED failure in the lighting module, and determine that the failure cause for the failure is a voltage surge pulse caused by a mains failure, which causes the corresponding failure in other building infrastructure devices of the plurality of building infrastructure devices also.

Predicting the failure cause by the monitoring device in the building infrastructure according to the first aspect provides the advantage that further effects on the building infrastructure device become predictable: e.g. a field application in an environment in which numerous mains voltage surges occur, a lifetime of circuit components such as mains VDR of the plurality of building infrastructure devices exposed to these mains voltage surges may be expected to decrease. The monitoring device and a control and management of the building infrastructure may schedule regular checks of building infrastructure devices, which may be affected by the mains voltage surges. This targeted increase in maintenance of the building infrastructure may decrease the time for which building infrastructure devices are down with a failure and waiting for repair or replacement, thereby increasing availability of the building infrastructure.

According to an embodiment of the building infrastructure, the common environmental influence includes at least one of a mains supply failure and a temperature event. A temperature event may be exceeding an upper threshold or falling below a lower threshold defining an intended operating range for the ambient temperature. Such a temperature range can be defined in the technical specification of the infrastructure device.

Failure causes originating in the mains supply or due to excessive ambient temperatures are examples, in which the improved use of available data by the monitoring device helps to improve determining failure causes more precisely without adding further sensors into the plurality of building infrastructure devices and increasing complexity and cost of the individual building infrastructure device, and therefore system cost of the building infrastructure disproportionally.

The plurality of building infrastructure devices may include a plurality of driver devices, in particular a plurality of light driver devices.

Each driver device of the plurality of driver devices may include a power factor correction (PFC) circuit and a DC/DC-converter circuit.

The plurality of building infrastructure devices may be configured to generate a load current for driving an electric load based on a mains power supply.

The electric load may include at least one lighting module, which is supplied by the light driver device with the load current (LED current).

Lighting systems including a plurality of building infrastructure devices providing a load current (LED current) for a plurality of lighting modules are a widespread application for the building infrastructure and may benefit from the additional possibilities provided by the building infrastructure.

An embodiment of the building infrastructure device show the failure message (error message) indicating an error shutdown of the building infrastructure device.

The failure message may indicate a failure category of the determined failure, wherein the failure category includes at least a mains failure, a building infrastructure device failure and a load failure.

In an advantageous embodiment of the building infrastructure, the infrastructure device comprises a device failure analysis unit configured to acquire reference parameter values corresponding to a reference operation state of the respective building infrastructure device. Furthermore, the device failure analysis unit is configured to control the building infrastructure device to switch into the reference operation state. The device failure analysis unit is configured to read current parameter values the building infrastructure device, and to evaluate the current parameter values with the reference parameter values, which may be stored in an error mapping file, in order to generate output data, and to provide the generated output data to an output device. The output device is configured to transmit the output data to at least one of a predictive maintenance device or a user interface for presenting the output data to a user. In order to be sure that the obtained parameters can be compared to each other, the current parameters values are obtained in the reference operation state for which also the reference parameter values were acquired.

It is to be noted that the device failure analysis unit may be included in the monitoring device or the infrastructure device.

The device failure analysis unit may be able to detect problems within a luminaire even before the entire luminaire fails, is shutting down or even destroyed, based on parameters such as an ON-time of switches in DC/DC-converter circuits implemented in a switched-mode power supply (SMPS) topology, or measured voltages and currents of individual circuit stages in the building infrastructure device.

The plurality of parameters may include at least one of input signals and output signals of internal electric circuits of the plurality of building infrastructure devices.

The plurality of parameters may include infrastructure measured signal values (measured signal values) including at least one of measured voltage amplitudes and current amplitudes.

Thus, for example, aging effects of resistors or a migration of failures over resistors becomes detectable.

The plurality of parameters may include infrastructure control signal values (control signal values) that include at least one of a length of a period in which a switch control signal switches a switch into a conducting state or a duty cycle of the switch control signal.

This enables to gain data for identifying failures occurring within or in combination with SMPS circuits widely used in contemporary DC/DC-converter circuits, for example. DC/DC-converter circuits are part of many devices of building infrastructure devices.

The plurality of parameters may include at least one of infrastructure measurement signal values (measurement signals) generated based on a process variable (manipulated variable) of a control loop, process variable values of the control loop, and control signal values output by a controller of the control loop.

Thus, differentiating between failures in the control loop or in measurement circuits for measuring the process variables is possible. Control loop architectures are regularly implemented in electronic circuits of building infrastructure devices.

According to an embodiment of the building infrastructure, the monitoring device is configured to evaluate the current parameter values and the reference parameter values, which are stored previously. The evaluations may include determining whether a PFC circuit, a DC/DC-converter circuit, or measurement circuits associated with the PFC circuit or the DC/DC-converter circuit respectively show a failure.

The measurements circuits may include at least one of a resistance divider network and a measurement coil.

Current approaches tend to concentrate of failures associated with circuit components that have short lifetime and dominate the lifetime expectancy of the building infrastructure device. The proposed approach offers a more detailed view into the state of the building infrastructure device and enables a more detailed prediction of future failures and failure causes.

The control circuit of the building infrastructure device or the monitoring device may now detect, whether a resistor in the control loop feedback is failing.

The reference parameter values include information on the initial state of building infrastructure device when it is operated in the reference operation state, e.g. after a factory acceptance test or after first time start up. A deterioration of the state of building infrastructure device over time in the filed becomes detectable by a computationally advantageous comparison of current parameter values with the reference parameter values stored in the error-mapping file.

The reference parameter values may be obtained for a specific type of building infrastructure device, or acquired as a device-specific reference parameter values for each building infrastructure device individually. The latter may be achieve by conducting a respective measurement in the reference operation state, which could be set directly after the device is powered up for the first time or at the end of a function check at the end of the manufacturing process.

Determining and using the reference parameter values valid for a plurality of building infrastructure devices of a same device type simplifies manufacturing of the building infrastructure devices with regard to time and cost. On the other hand, generating and using the device-specific reference parameter values for each individual building infrastructure device provides a more detailed prediction capability for each building infrastructure device in the field taking into account site-specific environmental influence.

The plurality of building infrastructure devices of the building infrastructure may each include a memory circuit configured to store the reference parameter values.

A building infrastructure device including the device failure analysis unit may comprises the capability to manage the reference parameter values, and therefore the standard based on which to determine the current state of the building infrastructure device locally. Replacing a building infrastructure device, in particular replacing a building infrastructure device with another building infrastructure device of a different type is easily possible, without requiring updating the reference parameter values at a monitoring server in the field to adapt to the other building infrastructure device of the different type, which may have different parameter and/or different parameter values.

According to an embodiment of the building infrastructure, the plurality of building infrastructure devices each include a device failure analysis unit (e.g. integrated in a control circuit) configured to evaluate the actual parameter values and the reference parameter values stored in an internal memory of the infrastructure device or retrieved from an external memory that may be included in the monitoring device.

Therefore, a control circuit of the building infrastructure device is able to perform the evaluating the parameter values, the monitoring and failure analysis and failure prediction locally.

The monitoring device of an embodiment of the building infrastructure may include a data storage unit configured to store the reference parameter values, which is in particular advantageous in case that the device failure analysis unit is included in the monitoring device.

Thus, the monitoring device may perform a combined data analysis for the plurality of building infrastructure devices based on the reference parameter values of the plurality of building infrastructure devices.

In an advantageous embodiment, the monitoring device is configured to switch the building infrastructure device into the reference operation state each time after a predefined interval has elapsed.

Thus, continuously the actual state of the plurality of building infrastructure devices, the evolvement of the state of the plurality of building infrastructure devices over time starting from the original (reference) state of the plurality of building infrastructure devices recorded by storing the reference parameter values is determinable. Predicting a future development of the building infrastructure, e.g. predicting future failures of devices, or scheduling of maintenance measures is possible implementing methods of predictive maintenance in the building infrastructure.

The subsequent description of an exemplary embodiment of the building infrastructure refers to the attached figures, in which
- Fig. 1: shows a simplified flowchart of an exemplary process of handling a failure message in the building infrastructure according to an embodiment;
- Fig. 2: provides an overview of the structure of an exemplary building infrastructure;
- Fig. 3: provides a simplified block diagram of a luminaire in the building infrastructure according to an embodiment;
- Fig. 4: illustrates a first example of a process of determining an error cause in a building infrastructure of an embodiment;
- Fig. 5: illustrates a second example of a process of determining an error cause in a building infrastructure of an embodiment;
- Fig. 6: illustrates a third example of a process of determining an error cause in a building infrastructure of an embodiment; and
- Fig. 7: illustrates a fourth example of a process of determining an error cause in a building infrastructure of an embodiment.

In the figures, same reference signs denote same or corresponding elements. The description of the figures dispenses with a discussion of same reference signs in different figures wherever deemed possible without adversely affecting understandability.

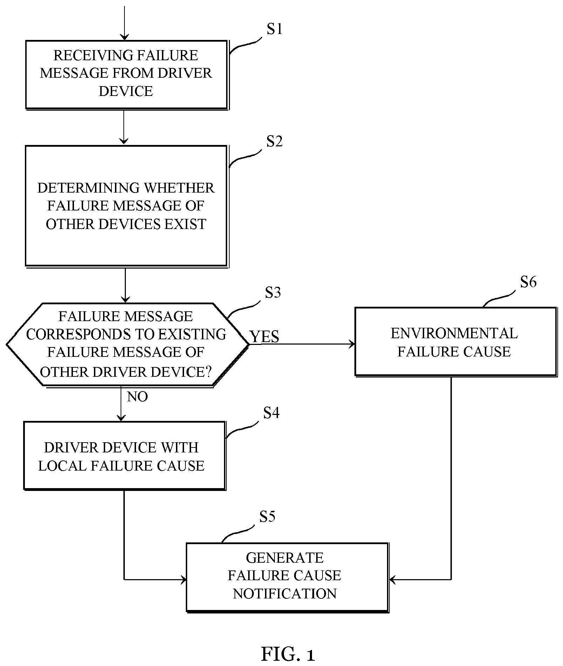

Fig. 1 shows a simplified flowchart of an exemplary process of handling a fault message in the building infrastructure 1 according to an embodiment.

The building infrastructure 1 comprises a plurality of building infrastructure devices 2.i, wherein i = 1, 2, 3, ..., n, and a monitoring device 7, which are connected by a communication network 6. The simplified structure of the building infrastructure 1 will be discussed in more detail with reference to fig. 2.

The building infrastructure 1 may be a lighting system.

The plurality of building infrastructure devices 2.i may include a plurality of light driver devices.

In step S1, the monitoring device 7 receives a failure message from a building infrastructure device 2.i of the plurality of building infrastructure devices 2.i.

The monitoring device 7 may receive a corresponding failure message or different failure messages from plural building infrastructure devices 2.i of the plurality of building infrastructure devices 2.i.

In step S2, the monitoring device 7 determines, in response to receiving the failure message from one building infrastructure device 2.i of the plurality of building infrastructure devices 2.i, whether at least one further building infrastructure device 2.i of the plurality of building infrastructure devices 2.i provides a corresponding failure message.

The monitoring device 7 determines in step S3, whether the failure message received in step S1 from the building infrastructure device 2.i corresponds to at least one existing failure message received from at least one other building infrastructure device 2.i.

In case the monitoring device 7 determines in step S3, that the at least one other building infrastructure device 2.i has a different failure as the building infrastructure device 2.i, or the at least one other building infrastructure device 2.i has no failure as the building infrastructure device 2.i at all, the monitoring device proceeds to step S4.

The monitoring device 7 determines that a failure cause for the failure is an internal cause of the building infrastructure device 2.i, as the at least one further building infrastructure device 2.i shows a different failure as the building infrastructure device 2.i, or the at least one further building infrastructure device 2.i has no failure as the building infrastructure device 2.i at all.

The monitoring device 7 proceeds to step S5. In step S5, the monitoring device 7 generates a test report that includes that the failure notified to the monitoring device 7 is a local failure of the building infrastructure device 2.i.

In case the monitoring device 7 determines in step S3, that the at least one other building infrastructure device 2.i has a corresponding failure as the building infrastructure device 2.i, the monitoring device proceeds to step S6.

In step S6, the monitoring device 7 determines that a failure cause for the failure is in a common environmental influence on the building infrastructure device 2.i. and the at least one further building infrastructure device 2.i as the at least one other building infrastructure device 2.i has the corresponding failure as the building infrastructure device 2.i. For a plurality of devices, such corresponding failures are determined to be the same failures, because identical devices will identically respond to same environmental influences.

The monitoring device 7 then proceeds also to step S5. In step S5, the monitoring device 7 generates a test report that includes that the failure notified to the monitoring device 7 has an environmental failure cause affecting plural building infrastructure devices 2.i or all building infrastructure devices 2.i of the plurality of building infrastructure devices 2.i.

The environmental failure cause may be a global influence, affecting plural building infrastructure devices 2.i or all building infrastructure devices 2.i of the plurality of building infrastructure devices 2.i of the building infrastructure 1.

Fig. 2 provides an overview over the structure of an exemplary building infrastructure 1.

The building infrastructure 1 depicted in fig. 2 is a lighting system, that includes a plurality of light driver devices as examples for building infrastructure devices 2.i, i = 1, 2, .., n, with an integer number n.

A mains supply device 5 provides electric power via a mains supply 4, e.g. an AC mains supply voltage, to the devices of the building infrastructure 1.

The light driver devices each generate and output a LED current I_{LED} as a DC current via load terminals LED+ and LED- to a lighting module connected via the load terminals LED+ and LED- to the light driver device.

The lighting modules are examples for load devices 2.i, i = 1, 2, .., n, with an integer number n.

The building infrastructure 1 further comprises a communication network 6. The communication network 6 of the lighting system is shown as a bus system, which enables a bidirectional communication between the light driver devices on the one hand and a control, monitoring and light management facility on the other hand.

The communication network 6 may comprise at least one of a wired communication bus or a wireless communication bus.

The control, monitoring and light management facility may include a control device 8 that controls operation of the light driver devices and the lighting modules.

The control, monitoring and light management facility may include a monitoring device 7 that monitors operation of the light driver devices and the lighting modules. Thus, the control, monitoring and light management facility may receive status messages, e.g. status messages reporting a current operational status of each light driver device, or a failure message from the devices connected via the communication network 6 with the control, monitoring and light management facility.

The control, monitoring and light management facility 7 may request status messages such as status messages reporting a current operational status of each light driver device, or a respective failure message from of each light driver device connected via the communication network 6 with the control, monitoring and light management facility 7.

The control, monitoring and light management facility 7 may include input/output devices providing a user interface, which enable a user or technician to access operational data of the lighting system, control operation of the lighting system, or schedule maintenance of the lighting system, for example.

The control, monitoring and light management facility 7 may include a data storage unit that stores data for operation of the lighting system. The stored data may include a file that includes reference parameter values of a plurality of parameters recorded associated with each light driver device when operated in a reference operation state.

Additionally or alternatively, the stored data may include at least one file includes reference parameter values of a plurality of parameters recorded associated with a specific type of light driver device.

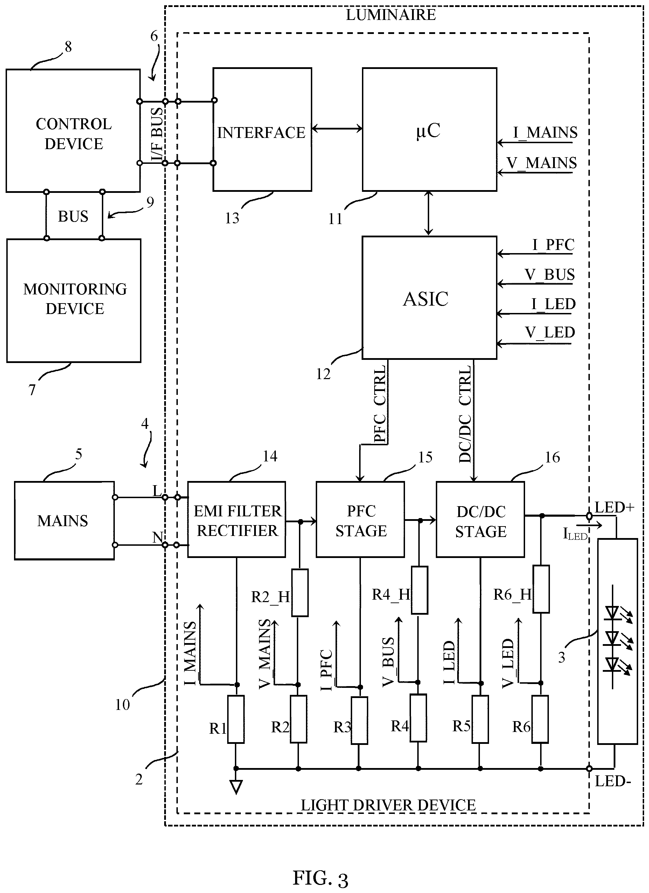

Fig. 3 provides a simplified block diagram of a luminaire 10 in the building infrastructure 1 according to an embodiment.

The luminaire 10 includes a light driver device 2 (LED driver) and a lighting module 3. The light driver device 2 generates the LED current I_{LED} at a LED voltage V_{LED} and outputs the LED current I_{LED} via the load terminals LED+ and LED- to the lighting module 3.

The lighting module 3 may include a plurality of light emitting diodes (LED) electrically connected in a series and/or parallel circuit topology to the load terminals LED+ and LED- of the light driver device 2.

The light driver device 2 of fig. 3 shows a mains supply interface connected to the mains supply 4 of the site, e.g. a mains supply grid of a building. The mains supply 4 may provide mains supply via an AC mains supply voltage to the luminaire 10 and its subassemblies, in particular to the light driver 2.

Fig. 3 shows the light driver 2 of fig. 3 only with some of its functional elements, illustrated are, for example, an EMI filter and rectifier circuit 14 (EMI filter and rectifier circuit stage 14), a PFC circuit 15 (PFC circuit stage 15 ) and a DC/DC-converter circuit 16 (DC/DC-converter stage 16) in a main power path of the light driver 2.

The mains supply interface obtains a mains supply current I_{AC,MAINS} at the AC mains supply voltage V_{AC} and provides the mains supply current I_{AC,MAINS} to the EMI filter and rectifier circuit 14, which performs filtering and rectification functions on the AC mains supply voltage V_{AC} and the AC mains supply current I_{AC,MAINS}. A measurement circuit including a shunt resistor R₁ and a resistive divider network comprising the resistors R2 and R2_H connected in series is arranged associated with the EMI filter and rectifier circuit 14.

Via the shunt resistor R1, the measurement circuit provides a measurement signal I_MAINS, whose value is representative for, e.g. proportional to, the mains supply current I_{AC,MAINS}.

Via the resistive divider network comprising the resistors R2 and R2_H, the measurement circuit provides a measurement signal V_MAINS, whose value is representative for, e.g. proportional to, the mains supply voltage V_{AC,MAINS}.

The measurement circuit provides the measurement signals I_MAINS and V_MAINS to a control circuit of the light driver device 2.

The control circuit may include at least one integrated circuit (IC). The specific light driver circuit 2 of fig. 3 shows the control circuit to include microcontroller circuit 11 and an application specific integrated circuit (ASIC) 12.

The measurement circuit provides the measurement signals I_MAINS and V_MAINS to the microcontroller circuit 11, in particular to analogue inputs of the microcontroller circuit 11. The microcontroller circuit 11 may perform mains supply monitoring based on the obtained measurement signals I_MAINS and V_MAINS.

The EMI filter and rectifier circuit 14 provides the filtered and rectified AC mains supply voltage V_{AC} and the AC mains supply current I_{AC, MAINS} to the subsequent PFC circuit 15 arranged thereafter in the main power path of the light driver device 2. The PFC circuit 15 performs power factor correction, e.g. changes a waveform of the current drawn by a load.

The PFC circuit 15 may perform active power factor correction using a buck converter topology, boost converter topology or buck-boost converter topology as typical examples of SMPS with a switch controlled by a switch control signal PFC_CTRL

A further measurement circuit including a shunt resistor R3 and a resistive divider network comprising the resistors R4 and R4_H connected in series is arranged associated with the PFC circuit 15.

Via the shunt resistor R3, the measurement circuit provides a measurement signal I_PFC, whose value is representative for, e.g. proportional to, a current I_{PFC} provided by the PFC circuit 15.

Via the resistive divider network comprising the resistors R4 and R4_H, the further measurement circuit provides a measurement signal V_BUS, whose value is representative for, e.g. proportional to, a DC bus voltage V_{BUS} generated and output by the PFC circuit 15.

The further measurement circuit associated with the PFC circuit 15 provides the measurement signals I_PFC and V_BUS to the control circuit of the light driver device 2. In the example shown in fig. 3, the further measurement circuit provides the measurement signals I_PFC and V_BUS to the ASIC 12, in particular to analogue inputs of the ASIC 12. The ASIC 12 may perform generating the switch control signal PFC_CTRL based on the obtained measurement signals I_PFC and V_BUS. The ASIC 12 provides the generated switch control signal PFC_CTRL to the PFC circuit 15.

The PFC circuit 15, the further measurement circuit associated with the PFC circuit 15, and the ASIC 12 implement a control loop for controlling the DC bus voltage V_{BUS} and the current I_{PFC} provided by the PFC circuit 15.

The PFC circuit 15 provides the DC bus voltage V_{BUS} and the current I_{PFC} to the subsequent DC/DC-converter circuit 16 arranged thereafter in the main power path of the light driver device 2. The DC/DC-converter circuit 16 generates the DC load voltage V_{LED} and the DC load current I_{LED} based on the DC bus voltage V_{BUS}. The DC/DC-converter circuit 16 provides the DC load voltage V_{LED} and the DC load current I_{LED} via the load terminals LED+ and LED- to the lighting module 3.

The PFC circuit 15 may have a SMPS circuit topology including at least one controlled switch, e.g. a buck converter topology, boost converter topology or buck-boost converter topology as typical examples of SMPS with a switch controlled by a switch control signal DC/DC_CTRL provided by a the ASIC 12.

A further measurement circuit associated with the DC/DC-converter circuit 16 includes a shunt resistor R5 and a resistive divider network comprising the resistors R6 and R6_H connected in series.

Via the shunt resistor R5, the further measurement circuit provides a measurement signal I_LED, whose value is representative for, e.g. proportional to, the load current I_{LED} provided by the DC/DC-converter circuit 16.

Via the resistive divider network comprising the resistors R6 and R6_H, the further measurement circuit provides a measurement signal V_LED, whose value is representative for, e.g. proportional to, the DC load voltage V_{LED} generated between the load terminals LED+ and LED-.

The further measurement circuit associated with the DC/DC-converter circuit 16 provides the measurement signals I_LED and V_LED to the control circuit of the light driver device 2. In the example shown in fig. 3, the further measurement circuit provides the measurement signals I_LED and V_LED to the ASIC 12, in particular to further analogue inputs of the ASIC 12. The ASIC 12 may generate the switch control signal DC/DC_CTRL based on the obtained measurement signals I_LED and V_LED. The ASIC 12 provides the generated switch control signal DC/DC_CTRL to the DC/DC-converter circuit 16 for controlling the at least one switch of the DC/DC-converter circuit 16 implemented in a SMPS circuit topology.

The DC/DC-converter circuit 16, the further measurement circuit associated with the DC/DC-converter circuit 16 and the ASIC 12 implement a further control loop.

The measured signals I_MAINS, V_MAINS, I_PFC, V_BUS, I_LED, V_LED (infrastructure measured signals) each are parameters of the light driver device 2.

The plurality of parameters of the light driver device 2 may further include timing information of the control signals PFC_CTRL and DC/DC_CTRL (infrastructure control signals).

The timing information of the control signals PFC_CTRL and DC/DC_CTRL may include a respective duration of an ON-time of each of the switches of the PFC circuit 15 and the DC/DC-converter circuit 16.

An ON-time of switch may be understood as the time the switch is in a conducting state.

The timing information of the control signals PFC_CTRL and DC/DC_CTRL may include a duty cycle of the switches of the PFC circuit 15 and the DC/DC-converter circuit 16.

The light driver device 2 shown in fig. 3 further comprises a communication interface 13, which enables the control circuit to perform bidirectional communication via the communication network 6 with a control device 8 and the monitoring device 7 of a lighting system.

The monitoring device 7 may be integrated with the control device 8 or may be implemented as a separate device with respect to the control device 8.

In an embodiment, which implements the control device 8 and the monitoring device 7 as separate devices, bus 9 may provide a communication link between the control device 8 and the monitoring device 7.

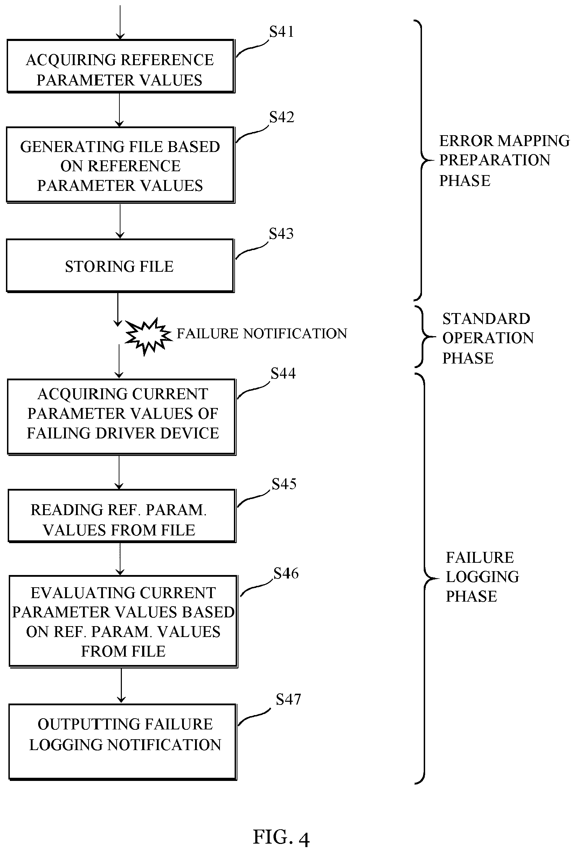

Fig. 4 illustrates a first example of a process of determining a failure cause in a building infrastructure 1 of an embodiment. In the following, the process is explained mentioning the steps being executed i general by the monitoring device 7, which then needs to comprise the device failure analysis unit.

The upper portion of fig. 4 shows process steps for generating the file storing the reference parameter values in an error mapping preparation phase.

After generating and recording the reference parameter values obtained for a reference operation state of the infrastructure device in the file, the building infrastructure device 2, 2.i may operate in a operation phase.

Fig. 4 illustrates the case that while the building infrastructure device 2, 2.i is operating in a standard operational mode in the standard operation phase, a failure occurs and, based on the detected failure, a failure notification is generated and output. In response to the failure notification, the building infrastructure device 2, 2.i switches from the standard operational mode into the failure logging mode. Process steps of the building infrastructure device 2, 2.i operating in the failure logging mode in a failure logging phase after the failure notification is generated and output are in the lower portion of the flowchart of fig. 4.

In step S41, the monitoring device 7 acquires reference parameter values for a plurality of parameters from each building infrastructure device 2, 2.i of the plurality of building infrastructure devices 2, 2.i.

In step S42, the monitoring device 7 generates a file storing the reference parameter values.

In step S43, the monitoring device 7 stores the generated error mapping file.

In response to receiving the failure notification, the monitoring device 7 controls the plurality of building infrastructure devices 2, 2.i to switch into an error-mapping mode (failure logging mode).

In the failure logging phase, the monitoring device 7 controls the building infrastructure devices 2, 2.i to acquire read current parameter values of the plurality of parameters from the plurality of building infrastructure devices 2, 2.i in step S44.

In a step S45 succeeding to step S44, the monitoring device 7 reads the reference parameter values from the memory.

In step S46, the monitoring device 7 evaluates the current parameter values based on the reference parameter values stored to generate output data, and to provide the generated output data to an output device.

The output data may comprise a failure logging notification.

In step S47, the monitoring device 7 transmits the output data to at least one of a predictive maintenance device, e.g. for scheduling a maintenance action appropriate in response to the failure logging notification, or to a user interface for presenting the output data to a user.

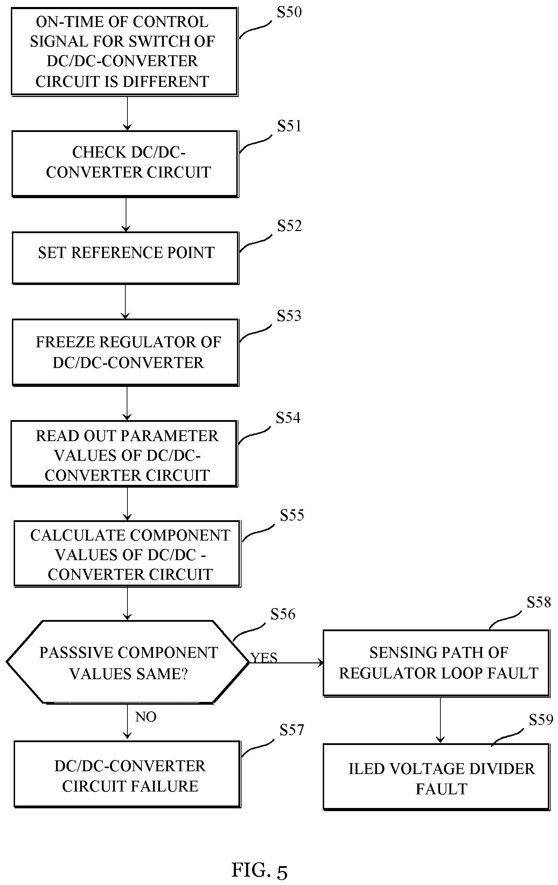

Fig. 5 illustrates an example of a process of determining an error cause in the building infrastructure 1 of the embodiment.

Fig. 5 shows a specific processing example for the building infrastructure device 2, 2.i, which includes the DC/DC-converter circuit 16.

In step S51, the monitoring device 7 determines that the the ON-time of the switch control signal DC/DC_CTRL is different.

The monitoring device 7 proceeds in step S51 by starting a check of the DC/DC-converter circuit 16.

In step S52, the monitoring device 7, the building infrastructure device 2, 2.i and the DC/DC-converter circuit 16 is set to operate in a predetermined reference operation state.

In step S53, a regulator for generating the switch control signal DC/DC_CTRL for the switch of the DC/DC-converter circuit 16 is frozen, in particular that the control loop for controlling the DC/DC-converter circuit 16 ceases control of the load current I_{LED} and instead maintains the parameters of the control loop for the set reference operation state.

In step S54, the monitoring device 7 acquires the current parameter values of the plurality of parameters of the DC/DC-converter circuit 16.

In step S55 succeeding to step S54, the monitoring device 7 calculates components values of passive components of the DC/DC-converter circuit 16 based on the acquired parameter values and the known structure of the DC/DC-converter circuit 16.

Subsequently, the monitoring device 7 determines whether the calculated component values of step S55 correspond, in particular are equal to stored component values of the components available to the monitoring device 7. The stored values of the components may be recorded in the file storing the reference parameter values.

In case step S56 provides the result that the calculated component values of step S55 correspond to the stored component values of the components (YES), the process proceeds to step S58. In step S58, the monitoring device 7 determines that the sensing path of the control loop has a failure, in particular, that the measurement circuit for measuring the load current I_{LED} and generating the measurement signal I_LED representative for the load current I_{LED} has a failure.

The process proceeds from step S58 to step S59 and outputs a notification of a failure of the I_{LED} measurement circuit, e.g. an I_{LED} voltage divider.

If step S56 provides the result that the calculated component values calculated in step S55 differ from the stored component values of the components (NO), the process proceeds to step S57 and determines that DC/DC-converter circuit 16 has a failure.

S57 returns a notification of a failure of the DC/DC-converter circuit 1.

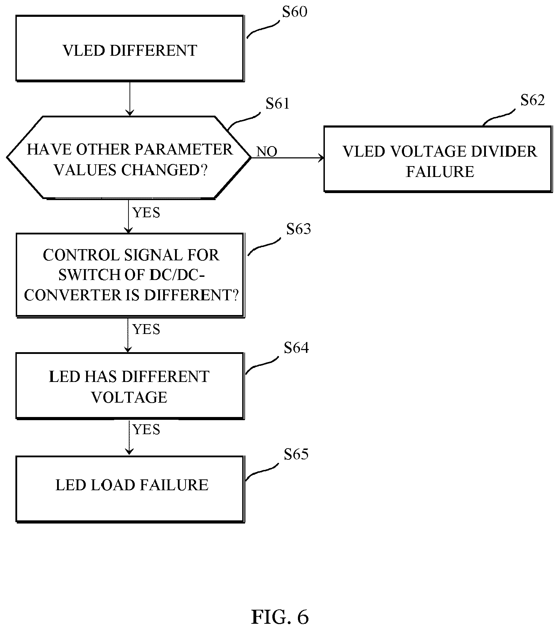

Fig. 6 illustrates a further example of a process of determining a failure cause in the building infrastructure 1 of the embodiment.

In step S60, the monitoring device 7 determines that the current value of the parameter V_LED is different.

The monitoring device 7 acquires the current parameter values of the plurality of parameters of the building infrastructure device 2, 2.i, and in particular of the DC/DC-converter circuit 16.

The monitoring device 7 proceeds in step S61 by determining whether other current parameter values of the plural parameters are different to the parameter values stored in the error mapping file.

If in step S61, the monitoring device 7 determines that no other current parameter values of the plural parameters differ from the reference parameter values stored in the file (NO), the process proceeds to step S62. In step S62, it is concluded that the measurement circuit for measuring the current value of the parameter V_LED, which represents the load voltage V_{LED} does not operate according to its intended function. In particular, the voltage divider including the resistors R and R6_H of the measurement circuit illustrated in fig. 3 may have a failure.

In step S62, the monitoring device ends the processing and outputs a failure notification including an information a failure of the V_LED measurement circuit.

If in step S61, the monitoring device 7 determines that other current parameter values of the plural parameters differ from the parameter values stored in the error-mapping file (YES), the process proceeds to step S63

In step S63, the monitoring device 7 determines whether the control signal DC/DC_CTRL for the switch of the DC/DC-converter circuit 16 is different from a respectively stored parameter value of the plurality of parameters.

If the in step S63, the monitoring device 7 determined that the control signal for the switch of the DC/DC-converter circuit 16 is different from a respectively stored parameter value of the plurality of parameters, the process proceeds to step S64.

In step S64, the monitoring device 7 determines whether the lighting module 3, 3.i has a different input voltage V_{LED}.

If the monitoring device 7 determines whether the lighting module 3, 3.i has a different input voltage V_{LED}, the process proceeds to step S65 and concludes that the lighting module 3, 3.i has a failure and does not operate according to its intended function, e.g. one or more LEDs of the lighting module may be defective. In particular, the monitoring device 7 generates a failure notification that the lighting module 3, 3.i has a failure and terminates the processing by generating and outputting a respective failure notification.

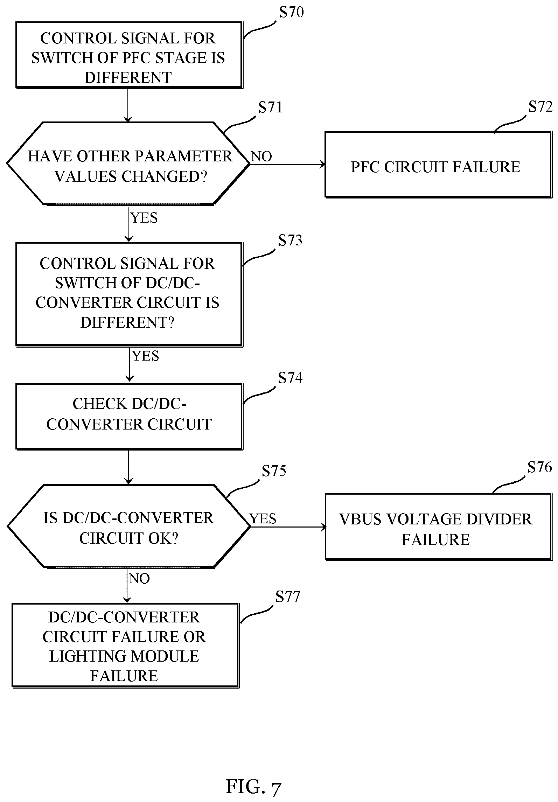

Fig. 7 illustrates a further example of a process of determining a failure cause in the building infrastructure 1 of the embodiment.

In step S70, the monitoring device 7 determines that the current value of a parameter, in particular the current parameter value of the control signal PFC_CTRL for the PFC circuit 15 is different, in particular has the current parameter value that is different to a stored reference parameter value in the file.

The monitoring device 7 acquires the current parameter values of the plurality of parameters of the building infrastructure device 2, 2.i, and in particular of the DC/DC-converter circuit 16.

The monitoring device 7 proceeds in step S71 by determining whether other current parameter values of the plural parameters are different to the reference parameter values stored in the file.

If in step S71, the monitoring device 7 determines that no other current parameter values of the plural parameters differ from the reference parameter values stored in the file (NO), the process proceeds to step S72 and concludes that the PFC circuit 15 has a failure.

In step S72, the monitoring device 7 terminates the processing and outputs a failure notification including an information a failure of the PFC circuit 15.

If in step S71, the monitoring device 7 determines that other current parameter values of the plural parameters differ from the stored reference parameter values (YES), the process proceeds to step S73.

In step S73, the monitoring device 7 determines whether the control signal for the switch of the DC/DC-converter circuit 16 is different from a respectively stored parameter value of the plurality of parameters.

If in step S73 the monitoring device 7 determined that the control signal for the switch of the DC/DC-converter circuit 16 is different from a respectively stored reference parameter value of the plurality of parameters, the process proceeds to step S74.

In step S74, the monitoring device 7 proceeds with checking the DC/DC-converter circuit 16 and proceeds then to step S75. In step S75, the monitoring device 7 determines whether the check of the DC/DC-converter circuit 16 in step S74 resulted in detecting a failure of the DC/DC-converter circuit 16 or the DC/DC-converter circuit 16 is operating according to its intended function and specification.

If the monitoring device 7 determines that the DC/DC-converter circuit 16 is operating according to its intended function and specification, the process proceeds to step S76. In step S76, the monitoring device 7 concludes that the measurement circuit for measuring the bus voltage V_{BUS} has a failure and does not operate according to its intended function, e.g. one or more of the resistors R4 and R4_H of the measurement circuit may be defective. In particular, the monitoring device 7 generates a failure notification that the measurement circuit for generating the voltage V_BUS has a failure. The monitoring device 7 terminates the processing in step S76 with generating and outputting a respective failure notification.

If tin step S75 he monitoring device 7 determines that the DC/DC-converter circuit 16 is not operating according to its intended function and specification (NO), the process proceeds to step S77. In step S77, the monitoring device 7 concludes that the either the DC/DC-converter circuit 16 or the lighting module 3, 3.i has a failure and does not operate according to its intended function. In particular, in step S77 the monitoring device 7 may generate a failure notification that the DC/DC-converter circuit 16 or the lighting module 3, 3.i has a failure. The monitoring device 7 terminates the processing in step S77 with generating and outputting a respective failure notification.

It is to be noted that the above given explanations assume that the evaluation of current parameter values and stored reference parameter values is performed by a device analysis unit included in the monitoring unit 7. However, such device failure analysis unit may also be included in the infrastructure device and report the outcome of the analysis to the monitoring device 7. The device failure analysis unit may for example be formed by the control unit of the infrastructure device.

## Claims

1. Building infrastructure comprising a plurality of building infrastructure devices (2; 2.i) and a monitoring device (7), which are connected by a communication network (6),
wherein the monitoring device (7) is configured to determine, in response to receiving a failure message from one of the building infrastructure devices (2; 2.i), whether at least one further building infrastructure device (2; 2.i) of the plurality of building infrastructure devices (2; 2.i) has a corresponding failure, and
the monitoring device (7) is configured to determine that a failure cause for the failure is a common environmental influence of the building infrastructure device (2; 2.i) and the at least one further building infrastructure device(2; 2.i) in case the at least one further building infrastructure device (2; 2.i) has the corresponding failure as the one building infrastructure device (2; 2.i), and
the monitoring device (7) is configured to determine that a failure cause for the failure is a local failure of the building infrastructure device (2; 2.i), in case no further building infrastructure device (2; 2.i) has a corresponding failure as the one building infrastructure device (2;, 2.i).

2. The building infrastructure according to claim 1, wherein
the common environmental influence includes at least one of a mains supply failure and a temperature event.

3. The building infrastructure according to any one of the preceding claims, wherein
the plurality of building infrastructure devices (2; 2.i) is configured to generate a load current for driving an electric load based on a mains power supply (4, 5).

4. The building infrastructure according to claim 3, wherein
the plurality of building infrastructure devices (2; 2.i) includes a plurality of driver devices, in particular a plurality of light driver devices, and
the electric load includes at least one lighting module (3; 3.i).

5. The building infrastructure according to any one of the preceding claims, wherein
the failure message indicates an error shutdown of the building infrastructure device (2; 2.i), and/or
the failure message indicates a failure category, wherein the failure category includes at least a mains failure, a building infrastructure device error and a load error.

6. The building infrastructure according to any one of the preceding claims, wherein
the building infrastructure (1) comprises a device failure analysis unit (7) configured to acquire reference parameter values corresponding to a reference operation state for at least one building infrastructure device (2; 2.i);
to control the building infrastructure device (2; 2.i) to switch into the reference operation state;
to read current parameter values from the building infrastructure device (2; 2.i),
to evaluate the current parameter values with the reference parameter values in order to generate output data, and to provide the generated output data to an output device; and
the output device is configured to transmit the output data to at least one of a predictive maintenance device or a user interface for presenting the output data to a user.

7. The building infrastructure according to claim 6, wherein
the plurality of parameters include at least one of:
input signals and output signals of internal electric circuits of the plurality of building infrastructure devices (2, 2.i),
infrastructure measured signal values including at least one of measured voltage amplitudes and current amplitudes,
infrastructure control signal values that include at least one of a length of a period in which a switch control signal (PFC_CTRL, DC/DC_CTRL) switches a switch into a conducting state or a duty cycle of the switch control signal (PFC_CTRL, DC/DC_CTRL), and
infrastructure measurement signal values generated based on a process variable of a control loop, process variable values of the control loop, and control signal values output by a controller of the control loop.

8. The building infrastructure according to claim 6 or 7, wherein
the device failure analysis unit (7) is further configured to determine, in the evaluation, whether a PFC circuit (15), a DC/DC-converter circuit (16), or measurement circuits associated with the PFC circuit (15) or the DC/DC-converter circuit (16) respectively shows a failure.

9. The building infrastructure according to claim 8, wherein
the measurements circuits include at least one of a resistance divider network (R1; R2, R2_H; R3, R3_H; R4, R4_H; R5, R5_H; R6, R6_H) and a measurement coil.

10. The building infrastructure according to any of claims 6 to 9, wherein
the building infrastructure device (2; 2.i) is configured to store the reference parameter values during production of the building infrastructure device (2; 2.i) or after installing the building infrastructure device (2; 2.i) at a site in a field.

11. The building infrastructure according to any one of claims 6 to 11, wherein
the device failure analysis unit (7) is configured to acquire the reference parameter values for a specific type of building infrastructure device (2; 2.i), or to generate the reference parameter values for a building infrastructure device (2; 2.i) individually.

12. The building infrastructure according to any of claims 6 to 11, wherein
the device failure analysis unit is included in the monitoring device (7) or in the building infrastructure device.

13. The building infrastructure according to any of claims 6 to 12, wherein
the device failure analysis unit (7) is configured to switch the building infrastructure device (2; 2.i) into the reference operation state each time after a predefined interval has elapsed.
